# EUROPEAN PATENT APPLICATION

(11) **EP 4 109 627 A1**
(43) Date of publication of application: **28.12.2022**
(21) Application number: 21181087.4
(22) Date of filing: 23.06.2021
(51) Int. Cl.: H01M 10/613, H01M 10/625, H01M 10/6569, H01M 50/204, H01M 50/249, H01M 10/6567, H01M 10/658, B60L 58/26

(54) **A COOLING SYSTEM FOR RECHARGEABLE BATTERIES**

(71) Applicant: Arctic impulse Oy, 01400 Vantaa (FI)
(72) Inventor: Kakkonen, Jussi, 01400 Vantaa (FI)
(74) Representative: LEITZINGER OY

(57) **Abstract**

The present disclosure prsents a battery arrangement for an electric vehicle.The arrangement comprises a sealed container, a battery pack in a bottom portion of the sealed container, a cooling fluid in the container such that the battery pack is submerged within the cooling fluid in its liquid form, and a condenser in a top portion of the sealed container. The condenser is configured to be in contact with vapour of the cooling fluid and condense it back to liquid form. The container has a sub-atmospheric nominal operating pressure and the walls of the sealed container are provided with vacuum insulation acting as thermal insulation that thermally isolates the interior of the sealed container from ambient environment. Characteristics of the cooling fluid are such that, at the nominal pressure, a boiling temperature of the cooling fluid is within an optimal operating temperature range of batteries in the battery pack, thereby causing the cooling fluid to start to boil into vapour when temperature of the batteries rises to the optimal operating temperature. Further, a rate at which the temperature of the boiling point rises in response to an increase of the operating pressure is such that it prevents the operating pressure from rising above a set maximum level.

## Description

### FIELD

The invention relates to rechargeable batteries, and in particular to cooling of battery packs used in different applications including electric vehicles.

### BACKGROUND

The use of rechargeable batteries has been increased in many different applications where storing energy is needed. For instance, electric vehicles, such as electric cars, buses, and trucks are becoming a commonplace type of transportation. One specific type of electric vehicles is battery electric vehicles (BEV) that mainly or exclusively uses energy stored in rechargeable battery to power electric motors to propel the vehicle.

Energy densities of present-day rechargeable batteries are not as high as the energy densities of fuels of internal combustion engines. Therefore, high energy efficiency of the rechargeable batteries of BEVs is important to enhance the operating range of electric vehicles. At the same time, however, any battery arrangement has to take safety issue into account. The battery arrangement has to be robust enough to withstand constant vibration and sudden impacts. Further, the battery arrangement should be such that it will not suffer a catastrophic failure during or after an accident (e.g. by exploding on a collision or in a fire starting after the collision). This combination of requirements may be very difficult to meet.

### BRIEF DISCLOSURE

An object of the present disclosure is to provide a battery arrangement so as to alleviate the above shortcomings. The object of the disclosure is achieved by the kinematic structure which is characterized by what is stated in the independent claim. The preferred embodiments of the disclosure are disclosed in the dependent claims.

In a battery arrangement according to the present disclosure, one or more packs or rechargeable batteries of an electric vehicle are immersed in a cooling fluid in its liquid form inside a sealed container.

Because the container is sealed, practically no cooling fluid escapes during the use, therefore reducing the need for frequent maintenance. Further, the pressure inside the container can be set to a sub-atmospheric pressure level which causes the boiling temperature of the cooling fluid to be about the optimal operating temperature range of the battery cells. Hence, at the abovementioned sub-atmospheric pressure, the cooling fluid starts to evaporate when the temperature of the battery cells rises above the optimal operating temperature range of the batteries. The battery container is also provided with a condenser that condenses the evaporated fluid back into liquid.

By setting the boiling temperature of the cooling fluid at the optimal operating temperature range of the batteries, the temperature of the batteries can be efficiently controlled. Further, since the battery arrangement is operated at sub-atmospheric pressures, it does not cause safety risks (e.g. due to over-pressurisation). In addition, boiling temperature increases as a function of pressure. This characteristic can be used as a safety measure that prevents the pressure from building up.

As the operating temperatures of the batteries and the cooling fluid may be affected by the ambient temperature outside the container, it is preferable to provide the container with efficient thermal insulation. Vacuum insulation may be used to provide robust and efficient thermal insulation.

With the battery arrangement according to the present disclosure, the operating temperature of a battery pack can be managed in an efficient, robust and safe manner.

### BRIEF DESCRIPTION OF THE DRAWINGS

In the following the invention will be described in greater detail by means of preferred embodiments with reference to the attached drawings, in which
Figure 1 shows an exemplary embodiment of a cooling arrangement according to the present disclosure; and
Figure 2 shows an exemplary diagram of the relation between the boiling temperature and the vapour pressure.

### DETAILED DISCLOSURE

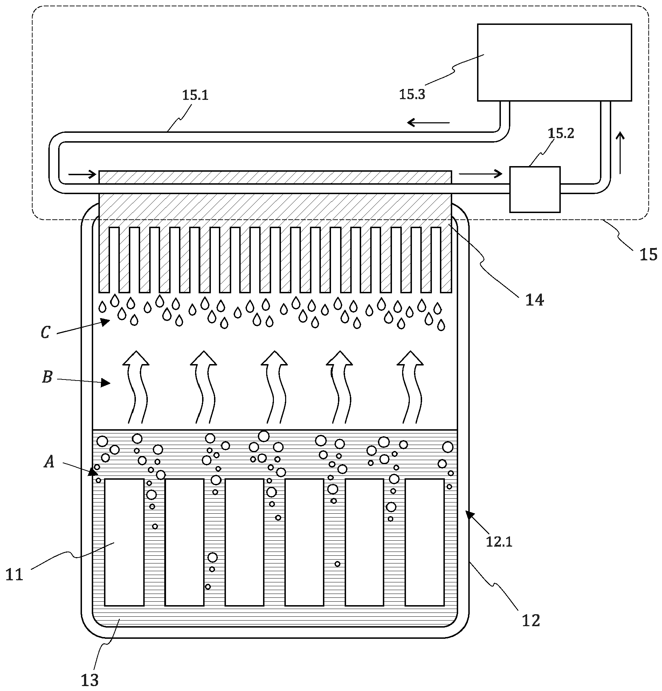

The present disclosure describes a battery arrangement and cooling of said battery arrangement. The battery arrangement may be an energy source for an electric vehicle, for example. The battery arrangement comprises at least one battery pack and a battery housing. The battery housing forms a sealed container encasing the battery pack. The battery pack is positioned in a bottom portion of the sealed container. The sealed container is provided with a cooling fluid and comprises a condenser in its top portion. Figure 1 shows a simplified diagram of an exemplary embodiment of the cooling arrangement according to the present disclosure. In Figure 1, a battery pack comprising a plurality of battery cells 11 have been positioned in a lower portion of a battery housing. The housing a sealed container 12 around the battery cells 11.

In the context of the present disclosure, the term "battery" is intended to be understood as a rechargeable battery (i.e. an accumulator). A battery pack is intended to be understood as one or more battery cells forming a module. The cells in the module may be connected in series and/or in parallel in order to produce a desired nominal current/voltage. A battery-powered apparatus, such as an electric vehicle, may comprise one or more battery packs. Further, on the context of the present disclosure, a sealed container means a container that encapsulates the battery pack and the cooling fluid to a closed, hermetically sealed volume. During use, the amount of cooling fluid escaping the container may be practically non-existent. If the electric vehicle has a plurality of battery packs, each of them may be contained in a separate container. Alternatively, more than one battery pack may be positioned in one container.

While the cooling arrangement according to the present disclosure is mostly discussed in relation to automotive electric vehicles, it is not limited to only such use. Other electric vehicles, including marine and aerial electric vehicle, can also utilise the battery arrangement according to the present disclosure. Further, the battery arrangement can be used in other applications than electric vehicle applications. In fact, the cooling arrangement can be used in all energy storage applications utilising rechargeable batteries. In addition, while the present disclosure discussed cooling arrangements mostly in relation to lithium-based batteries, the cooling arrangement may be utilized with other kind of rechargeable batteries, as long as their optimal operating temperature remains within a relatively narrow range at different operating points (operating currents).

In the battery arrangement according to the present disclosure, the battery pack is submerged within the cooling fluid in its liquid form. The battery pack is preferably completely immersed in the liquid during use. The closed volume has enough room for vapour of the cooling fluid so that heat emanating from the battery pack can cause the cooling fluid to boil from its liquid form to vapour at the operating pressure of the sealed container. In Figure 1, the battery cells 11 are completely immersed in cooling fluid 13 in its liquid form. The surface level of the cooling liquid 13 is above the tops of the battery cells 11. The inside volume of the container 12 is large enough to fit the battery cells 11 and the portion of the cooling fluid in its liquid form. Further, the volume also has room for vapours of the cooling fluid 13.

In the battery arrangement, temperature of battery cells of the at least one battery pack is maintained at a desired level with two-phase immersion cooling. The term "two-phase" in conjunction with the term "cooling" is intended to be understood as a cooling implementation where a cooling fluid is in two phases, namely the liquid phase and the gaseous phase. A phase change from liquid to gas ties heat very efficiently while a phase change from gas to liquid releases heat. In this disclosure, the term "cooling fluid" refers generally to a heat-transfer fluid regardless of its phase. The liquid phase of a cooling fluid may be referred to as a "condensed fluid", "cooling liquid" or simply as "liquid". A fluid in its gaseous phase may be referred to as a "gas" "steam", "vapour" or "evaporated fluid".

Surfaces of the battery cells act as evaporator on which the cooling liquid evaporates into vapour. For this purpose, it may be preferrable to arrange the battery cells to be at a distance from each other so that surface area of battery cells exposed to the cooling fluid is maximised. In Figure 1, the battery cells 11 are arranged into an array with a (non-zero) distance between each other. Evaporation of the cooling fluid 13 is shown as vapour bubbles A in Figure 1. The vapour efficiently extracts heat from the battery cells. The vapour rises upwards until it reaches a condenser in the top portion of the sealed container. In Figure 1, vapour rises (shown as arrows B) towards the condenser 14. The condenser 14 is configured to be in contact with the vapour of the cooling fluid 13 and condense it back to liquid form. The condensed liquid returns back to the bottom portion of the sealed container 12 (e.g. as a flow of liquid and/or in the form of droplets dripping from the condenser). In Figure 1, the condenser 14 condenses the vapour B into droplets C that drop back to the bottom portion of the container 12. As shown in Figure 1, the condenser 14 may comprise an array of fins, pin fins, or other structures increasing its surface area and heat transfer efficiency. In some embodiments, the condenser and/or surfaces of the interior walls of the container may comprise grooves, channels or other structures aiding flow of condensed liquid from the condenser to the bottom portion of the container. The battery arrangement according to the present disclosure thus implements a closed two-phase cooling circulatory system.

The arrangement is configured such that when the battery cells reach a predetermined temperature which is the saturation temperature of the cooling fluid at the operating pressure of the container, the liquid at surfaces of the cells starts to boil, thereby binding heat energy very efficiently. As a result, the temperature of the cells can be maintained at a desired level. The vapour of the cooling fluid rises up where it becomes in contact with a condenser that draws the heat in the vapour and condenses the vapour back into liquid form. Assisted by gravity, the condensed liquid returns back to cool the battery cells again.

In the arrangement according to the present disclosure, the sealed container may be arranged to have a sub-atmospheric nominal operating pressure range therein. In this context, a "sub-atmospheric" pressure is intended to be understood as a pressure that is below standard atmospheric pressure (i.e. 1 atm). The term "nominal operating pressure" represents a pressure within the container at nominal conditions prior to use. The term "nominal conditions" is intended to be understood as conditions where the battery cells are not being charged or discharged and the temperature of the battery cells and the cooling fluid is still below the optimal operating temperature of the battery cells (e.g. at storage conditions).

The volume of the closed container is preferably such that the operating pressure remains sub-atmospheric for the whole operating pressure range of the arrangement, even when the temperature of the batteries is at the upper limit of their optimal operating temperature range. When the battery arrangement is configured to operate at sub-atmospheric pressures, a pressure build-up (with respect to the ambient atmospheric pressure) can be avoided. For example, the nominal operating pressure may be about half standard atmosphere and the operating pressure may always remain below 1 atm during use, for example.

In addition to the advantage of avoiding pressure build-ups, a sub-atmospheric operating pressure has another advantage. By adjusting the operating pressure, the boiling point of a cooling fluid can be adjusted. In this context, the term "boiling point" represents a specific combination of a pressure and a temperature at which boiling of the cooling fluid starts. In the present disclosure, a temperature at which the cooling fluid starts to boil at the operating pressure of the container is referred to as a "boiling temperature" or as a "temperature of a boiling point".

The nominal pressure and the cooling fluid may be selected such that, at the nominal pressure, a boiling temperature of the cooling fluid is within an optimal operating temperature range of batteries in the battery pack. For example, an optimal operating temperature for present-day rechargeable Li-ion batteries is between 30 to 45 °C. In applications using such Li-ion batteries, the boiling temperature may be configured to be in the abovementioned range. Since a sub-atmospheric pressure lowers the boiling temperature of the cooling fluid, a cooling fluid and its desired boiling temperature can be quite freely selected according to the teachings of the present disclosure.

The arrangement may then be used to keep the temperature of the batteries at the desired level. When temperature of the batteries rises to the boiling temperature of the cooling fluid, the cooling liquid starts to evaporate into vapour. As the condenser condenses vapour back into liquid, the operating pressure in the container can be maintained at the desired level. Further, as the operating pressure is maintained at a desired level, the boiling temperature of the cooling fluid, and consequently, the temperature of the battery pack, can be maintained at a desired level. The cooling approach according to the present disclosure suits well for batteries having low optimal operating temperature. For example, the cooling arrangement is particularly well-suited for lithium-based batteries that typically have their optimal operating temperatures a few degrees above ambient temperature.

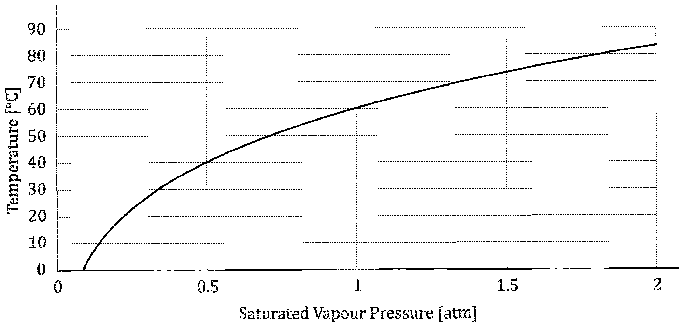

While the condenser can keep the pressure at a desired level during normal operation by condensing the vapour back into liquid, it may be preferable to have other means for preventing the pressure from building up. Characteristics of a cooling fluid at low pressures can be utilized as a safety measure against this kind of scenario. The temperature of the boiling point is proportional to the operating pressure. In other words, the boiling temperature increases as the operating pressure increases. However, this relation is non-linear. Figure 2 shows an exemplary diagram of the relation between the boiling temperature and a vapour pressure of a cooling fluid. The cooling fluid in Figure 2 is a hydrofluoroether (HFE) -based composition under the brand "Novec 7100" by manufacturer 3M. The vapour pressure is the pressure exerted by a vapour of the cooling fluid in thermodynamic equilibrium with its condensed phase (liquid) at a given temperature in a closed system. In the arrangement according to the present disclosure, the operating pressure corresponds with the vapour pressure.

At low pressure values in Figure 2, the boiling temperature increases rapidly in response to an increase in the vapour pressure while at higher vapour pressures the boiling temperature is less responsive to the changes of the pressure. At low pressure, an increase in vapour pressure causes a significant increase in the temperature of the boiling point. As the boiling temperature rises, less vapour is generated and the rate of accumulation of pressure reduces. At the same time, the condenser keeps on condensing vapour back into liquid.

The cooling fluid may thus be selected such that a rate at which its boiling temperature rises in response to an increase of the operating pressure is such that it prevents the operating pressure in the closed container from rising above a set maximum level. This set maximum level may be such that the boiling temperature of the cooling fluid is at (or above) the upper limit of the optimal operating temperature of batteries used and may depend on the type of batteries.

On the other hand, if the boiling temperature is allowed to rise in order to reduce evaporation of the cooling fluid, the cooling fluid is no longer able to as efficiently keep the temperature of the battery in the desired range. Therefore, it may be preferable to be able to limit the operation of the battery pack when the boiling temperature rises. For example, battery packs (and even individual battery cells) may be provided with a battery management system (BMS). A BMS may comprise temperature sensors on the battery cells of the battery pack and means for limiting the charging and discharging of the battery cells. When BMS notices that the temperature of the battery pack (or battery cell) rises above a set limit, it may limit its performance to bring the temperature back to an acceptable level. In this manner, the temperatures of the batteries can be maintained at a safe level even when the condenser is not able to provide enough cooling.

Both of the above-discussed desirable characteristics, i.e. a boiling temperature in a desired range at sub-atmospheric operating pressures and a high rate of change of the boiling temperature at said sub-atmospheric operating pressures, can be achieved with various cooling fluids. As an example, HFE-based compositions may be used as the cooling fluids in Li-ion battery applications discussed above. Present-day HFE-based compositions typically have boiling temperatures around 50 to 100 °C at standard atmosphere. The boiling temperature can be brought down to the desired level (for example, 30 to 45 °C in the case of Li-ion batteries) by lowering the pressure inside the container. For example, the composition "Novec 7100" in Figure 2 has a boiling temperature of about 60 °C at standard atmosphere, and this boiling temperature can be brought to the range of 30 to 45 °C by reducing the vapour pressure to a level between 0.3 and 0.7 atm.

The battery arrangement according to the present disclosure is not limited only to the above-mentioned HFE-based compositions, however. Other cooling fluids having the desirable characteristics may also be used.

In addition to the above-discussed characteristics, the cooling fluid should preferably be non-conductive since the cooling fluid is in close contact with the battery cells. Further, the cooling fluid should preferably be non-flammable and have low toxicity and global warming potential. HFE-based compositions typically have all these characteristics.

The above paragraphs have mostly discussed the features of a first heat transfer system formed inside the interior of the container. The first heat transfer system transfers heat from the battery cells to the condenser. Another aspect of the arrangement according to the present disclosure is transferring of heat away from the condenser. For this purpose, the battery arrangement may comprise (or may be coupled to) a second heat transfer system configured to cool the condenser. In some embodiments, the second heat system may be in the form of a single-phase liquid cooling system, for example. In Figure 1, the condenser 14 is cooled with a second heat transfer system 15. As shown in Figure 1, the second heat transfer system 15 may be integrated to the condenser 14. The system 15 comprises water pipes 15.1 running through the condenser 14, a water pump 15.2 for providing water flow in the pipes, and a heat exchanger 15.3 for transferring heat in the water running in the pipes 15.1 to ambient air, for example. Alternatively, instead of integrating the water circulation system to the condenser, a cooling plate with a water circulation system may be attached to the condenser to cool the condenser. While the example of Figure 1 shows the condenser being cooled with water cooling, the arrangement is not limited to water as the cooling liquid. Any cooling liquid with suitable characteristics may be used. One such characteristic is that the boiling temperature of the cooling liquid should higher than the boiling temperature of the cooling fluid inside the container.

Yet another aspect of the arrangement according to the present disclosure is thermal insulation of the batteries. Ambient temperature may differ significantly due to geography and time of year, for example. Thus, an electric vehicle utilising the battery arrangement according to the present disclosure may have to be able to withstand ambient temperatures ranging from -50 to 60 °C, for example. If the battery cells or a cooling system of the battery cells would be directly exposed to this kind of temperatures, managing the temperature of the battery cells would be very difficult, in particular when the cooling system is based on two-phase cooling. It may therefore be preferable to minimise the effects of ambient temperature to the two-phase cooling.

Vacuum insulation provides an effective means for thermal insulation. Walls of the sealed container may be provided with vacuum insulation acting as thermal insulation that thermally isolates the interior of the sealed container from ambient environment. For example, the walls of the closed container can be provided with vacuum-insulated panels (VIP). The panels may comprise porous material (such as aerogel) sandwiched between panel walls and possibly chemicals to collect gases leaked through the walls.

VIP panels may have some fire properties that are not well suited for vehicular use. For example, some materials of the panels may be brittle and/or prone to melting in extreme conditions (e.g. in a vehicle fire). Therefore, it may be preferable to implement a vacuum in a different manner, e.g. by using double walls on the closed container, where the double walls have a vacuum therebetween. In this manner, vacuum insulation may be implemented in a fireproof and mechanically robust manner. In Figure 1, the container 12 has double walls and a vacuum 12.1 therebetween.

It is obvious to a person skilled in the art that the battery arrangement and the cooling method can be implemented in various ways. The invention and its embodiments are not limited to the examples described above but may vary within the scope of the claims.

## Claims

1. A battery arrangement for an electric vehicle, wherein the arrangement comprises
- a sealed container,
- a battery pack in a bottom portion of the sealed container,
- a cooling fluid in the container such that the battery pack is submerged within the cooling fluid in its liquid form, and
- a condenser in a top portion of the sealed container, wherein the condenser is configured to be in contact with vapour of the cooling fluid and condense it back to liquid form,
wherein
- the container has a sub-atmospheric nominal operating pressure,
- walls of the sealed container are provided with vacuum insulation acting as thermal insulation that thermally isolates the interior of the sealed container from ambient environment, and
- characteristics of the cooling fluid are such that
∘ at the nominal pressure, a boiling temperature of the cooling fluid is within an optimal operating temperature range of batteries in the battery pack, thereby causing the cooling fluid to start to boil into vapour when temperature of the batteries rises to the optimal operating temperature,
∘ a rate at which the temperature of the boiling point rises in response to an increase of the operating pressure is such that it prevents the operating pressure from rising above a set maximum level.

2. A battery arrangement according to claim 1, wherein the nominal operating pressure range is 0.3 to 0.7 atm.

3. A battery arrangement according to claim 1 or 2, wherein the cooling fluid is a hydrofluoroether-based composition.

4. A battery arrangement according to any one of claims 1 to 3, wherein the arrangement comprises a heat exchange system configured to cool the condenser.

5. A battery arrangement according to claim 4, wherein the heat exchange system cooling the condenser comprises a single-phase water-cooling plate unit attached to the condenser.

6. A battery arrangement according to any one of the preceding claims, wherein the container has double walls and a vacuum between the double walls.
